# EUROPEAN PATENT APPLICATION

(11) **EP 4 575 945 A1**
(43) Date of publication of application: **25.06.2025**
(21) Application number: 23867370.1
(22) Date of filing: 13.09.2023
(51) Int. Cl.: G06Q 10/06

(54) **AUTONOMOUS OPERATION AND MAINTENANCE METHOD AND APPARATUS, AND COMPUTER-READABLE STORAGE MEDIUM AND ELECTRONIC APPARATUS**

(30) Priority: 23.09.2022 CN 202211167706
(71) Applicant: ZTE CORPORATION, Shenzhen, Guangdong 518057 (CN)
(72) Inventor: ZHOU, Junchao, Shenzhen, Guangdong 518057 (CN); LIU, Haibo, Shenzhen, Guangdong 518057 (CN); FANG, Yanwei, Shenzhen, Guangdong 518057 (CN)
(74) Representative: Carangelo, Pierluigi
(86) International application number: PCT/CN2023/118625
(87) International publication number: WO 2024/061081

(57) **Abstract**

Provided in the embodiments of the present invention are an autonomous operation and maintenance method and apparatus, and a computer-readable storage medium and an electronic apparatus. The method comprises: sensing an operation and maintenance intention for performing operation and maintenance on an operated and maintained object, and generating an intention expression; generating a first operation instruction script or a first command sequence according to the intention expression; and executing the first operation instruction script or the first command sequence on the operated and maintained object.

## Description

### Technical Field

Embodiments of the present disclosure relate to information and communication technologies and the beyond 5G field, and in particular, to an autonomous operation and maintenance method and apparatus, and a computer-readable storage medium and an electronic apparatus.

### Background

With the rapid development and application of new technologies, Information and Communication Technology (ICT) and Beyond 5th Generation (B5G) operations and maintenance are facing numerous challenges.

Challenge 1: The rapid evolution of mobile communication technologies and the challenge of coexistence of multiple systems.

The network overlays multiple systems, with 2G/3G/4G/5G coexisting; traditional networks and virtualized networks coexist; there are significant differences in the operations and maintenance of multi-system networks, which increase the operational costs of network operations and maintenance, reducing the profits of operators.

Challenge 2: The challenge of network cooperation complexity brought by the introduction of new technologies to operations and maintenance.

New networks introduce an increasing number of new technologies: virtualization technologies represented by virtual machines and containers, Software Defined Network (SDN), Segment Routing IPv6 (SRv6) based on the IPv6 forwarding plane, Time-Sensitive Network (TSN), 5G Local Area Network (5GLAN), etc. The coexistence of multiple advanced technologies leads to an exponential increase in the complexity of network cooperation, optimization, and operations and maintenance management.

Challenge 3: The challenge brought by the intelligent connection of all things and the differentiation of services and the personalization of experience.

The intelligent connection of all things brings new types of connections between people-things and things-things; at the same time, the upgrade of industry ICT and B5G networks, differentiated service needs across various industries; coupled with the personalized experience requirements of thousands of people, leading to the customization, complexity, and diversity of needs.

These challenges have put forward higher requirements for ICT and B5G operations and maintenance, requiring operations and maintenance to be faster, simpler, and smarter. The traditional manual network operations and maintenance architecture and methods, with their low efficiency and complexity, can no longer meet the needs of multi-system coexistence, complex new technology cooperation, and intelligent inherent demands of ICT and B5G networks.

In response to the above challenges and problems, the industry is also actively promoting the automation and intelligence of network operations and maintenance, such as: the Tele Management Forum (TMForum) has proposed a three-layer framework and four closed-loop reference framework for autonomous driving networks with "single-domain autonomy and cross-domain cooperation"; the 3rd Generation Partnership Project (3GPP) standards organization has defined new Network Function devices (also referred to as Networks Functions (NF)) for intelligent network operations and maintenance management, in order to perform data analysis and optimization on the network, and to study the application scenarios and implementation architecture of intent in the network, promoting the standardization of intention expression, etc.

### Summary

The embodiments of the present disclosure provide an autonomous operation and maintenance method and apparatus, and a computer-readable storage medium and an electronic apparatus, which may at least solve the problems of low efficiency and complex operations and maintenance in traditional network operation and maintenance architectures and methods in the related art.

According to some embodiments of the present disclosure, an autonomous operation and maintenance method is provided, including: perceiving an operation and maintenance intention for operating and maintaining an object to be operated and maintained and generating an intention expression; generating a first operation instruction script or a first command sequence according to the intention expression; and executing the first operation instruction script or the first command sequence on the object to be operated and maintained.

According to another embodiment of the present disclosure, an autonomous operation and maintenance apparatus is provided, including: an intention perception component, configured to perceive an operation and maintenance intention for operating and maintaining an object to be operated and maintained and generate an intention expression; a script generator, configured to generate a first operation instruction script or a first command sequence according to the intention expression; and an execution component, configured to execute the first operation instruction script or the first command sequence on the object to be operated and maintained.

According to yet another embodiment of the present disclosure, a computer-readable storage medium is also provided. The computer-readable storage medium stores a computer program, and the computer program, when being executed by a processor, implements operations in any one of the method embodiments.

According to yet another embodiment of the present disclosure, an electronic apparatus is also provided, including a memory, a processor and a computer program stored on the memory and capable of running on the processor, wherein the processor executes the computer program to implement operations in any one of the method embodiments.

### Brief Description of the Drawings

Fig. 1 is a block diagram of the hardware structure of a computer terminal implementing an autonomous operation and maintenance method according to some embodiments of the present disclosure;
Fig. 2 is a flowchart of an autonomous operation and maintenance method according to some embodiments of the present disclosure;
Fig. 3 is a structural block diagram of an autonomous operation and maintenance apparatus according to some embodiments of the present disclosure;
Fig. 4 is a structural block diagram of an autonomous operation and maintenance apparatus according to some other embodiments of the present disclosure;
Fig. 5 is a structural block diagram of an intention-based autonomous operation and maintenance system according to some embodiments of the present disclosure;
Fig. 6 is a structural block diagram of the internal structure of a script automatic generator according to some embodiments of the present disclosure;
Fig. 7 is a flowchart of an automatic optimization method for an intention-based autonomous operation and maintenance system according to some embodiments of the present disclosure; and
Fig. 8 is a flowchart of a method for generating a script by a script automatic generator according to some embodiments of the present disclosure.

### Detailed Description of the Embodiments

Hereinafter, the embodiments of the present disclosure will be described in detail with reference to the accompanying drawings and in conjunction with the embodiments.

It should be noted that, terms such as "first" and "second" in the description, claims, and the accompanying drawings of the present disclosure are used to distinguish similar objects, but are not necessarily used to describe a specific sequence or order.

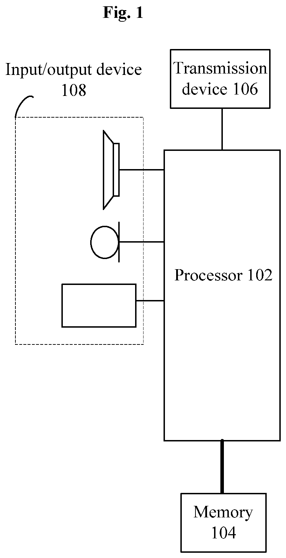

The method embodiments provided in the embodiments of the present disclosure may be implemented in a mobile terminal, a computer terminal, or a similar computing apparatus. By taking the running on a computer terminal as an example, Fig. 1 is a block diagram of the hardware structure of a computer terminal implementing an autonomous operation and maintenance method according to some embodiments of the present disclosure. As shown in Fig. 1, the computer terminal may include one or more (only one is shown in Fig. 1) processors 102 (the one or more processors 102 may include, but are not limited to, processing apparatuses such as a Central Processing Unit (MCU) or a Field Programmable Gate Array (FPGA)) and a memory 104 for storing data, wherein the computer terminal may further include a transmission device 106 for a communication function and an input/output device 108. Those having ordinary skill in the art may understand that the structure shown in Fig. 1 is merely exemplary, which does not limit the structure of the foregoing computer terminal. For example, the computer terminal may further include more or fewer components than shown in Fig. 1, or have a different configuration from that shown in Fig. 1.

The memory 104 may be configured to store a computer program, for example, a software program and a module of application software, such as a computer program corresponding to the autonomous operation and maintenance method in the embodiments of the present disclosure. The one or more processors 102 run the computer program stored in the memory 104, so as to execute various function applications and data processing, that is, to implement the foregoing method. The memory 104 may include a high-speed random access memory, and may also include a non-volatile memory, such as one or more magnetic storage devices, flash memory, or other non-volatile solid-state memory. In some embodiments, the memory 104 may further include a memory remotely located with respect to the one or more processors 102, which may be connected to a computer terminal over a network. Examples of such network include, but are not limited to, the Internet, intranets, local area networks, mobile communication networks, and combinations thereof.

The transmission device 106 is used to receive or transmit data via a network. Specific examples of the described network may include a wireless network provided by a communication provider of the computer terminal. In one example, the transmission device 106 may include a Network Interface Controller (NIC) that may be coupled to other network devices via a base station to communicate with the Internet. In an example, the transmission device 106 may be a Radio Frequency (RF) module for communicating wirelessly with the Internet.

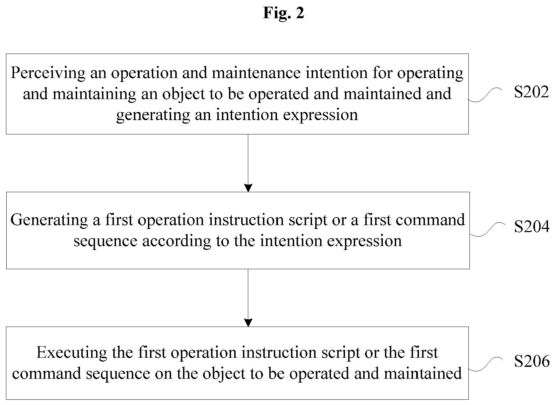

The present embodiment provides an autonomous operation and maintenance method running on the described computer terminal. Fig. 2 is a flowchart of an autonomous operation and maintenance method according to some embodiments of the present disclosure. As shown in Fig. 2, the flow includes the following operations S202 to S206.

In operation S202, an operation and maintenance intention for operating and maintaining an object to be operated and maintained is perceived, and an intention expression is generated.

In operation S204, a first operation instruction script or a first command sequence is generated according to the intention expression.

In operation S206, the first operation instruction script or the first command sequence is executed on the object to be operated and maintained.

The operation S202 of this embodiment includes the following operation: a slice name, a slice type and an operation type in the operation and maintenance intention are parsed to generate the intention expression, wherein the intention expression at least includes one of: a slice name, a slice type, an operation type and an operation range.

In this embodiment, the intention expression is a combination of descriptions of rules, strategies or actions.

The operation S204 of this embodiment includes the following operations: a command, a command atom capability set, an instruction or an instruction script satisfying a condition is selected based on the intention expression and according to a generation rule; and the first command sequence is generated according to the command and/or the command atom capability set, or the first operation instruction script is generated according to the instruction and/or the instruction script.

In an exemplary embodiment, the operation that the command, the command atom capability set, the instruction or the instruction script satisfying the condition are selected based on the intention expression and according to the generation rule includes: a first control action, first control information or first control strategy information is generated according to the intention expression; and a first command, a first command atom capability set, a first instruction or a first instruction script set is selected based on the first control action, the first control information or the first control strategy information and according to the generation rule.

In this embodiment, the generation rule includes one of: a local rule, a command set generation rule, or a script generation rule.

After the operation S206 in this embodiment, the autonomous operation and maintenance method may further include the following operations: device information after the first operation instruction script or the first command sequence is executed on the object to be operated and maintained is acquired; and the device information is analyzed according to a predetermined strategy, and whether the device information meets an expected target is determined based on the analysis of the device information.

In an exemplary embodiment, after the device information after the first operation instruction script or the first command sequence is executed on the object to be operated and maintained is acquired, the autonomous operation and maintenance method may further include: the device information is cleaned, organized and filtered according to a predetermined rule, wherein the device information at least includes one of: log information, performance information, alarm information and resource information.

In an exemplary embodiment, after whether the device information meets the expected target is determined based on the analysis of the device information, the autonomous operation and maintenance method may further include: a current operation and maintenance of the object under operation and maintenance is terminated in a case where it is determined that the device information meets the expected target; and in a case where it is determined that the device information does not meet the expected target, the intention expression is adjusted and a new operation and maintenance process is executed on the object under operation and maintenance based on the adjusted intention expression.

In an exemplary embodiment, the operation that the new operation and maintenance process is executed on the object under operation and maintenance based on the adjusted intention expression may include: a second command, a second command atom capability set, a second instruction or a second instruction script set is selected according to the adjusted intention expression and a generation rule corresponding to the adjusted intention expression, so as to generate a second operation instruction script or a second command sequence; and the second operation instruction script or the second command sequence is executed on the object under operation and maintenance to start the new operation and maintenance process.

In an exemplary embodiment, the autonomous operation and maintenance method may further include: basic Fault Configuration Accounting Performance and Security Management (FCAPS) operation maintenance is performed on the object to be operated and maintained, according to a basic command set.

Through the aforementioned operations, since the operation intention of the maintenance personnel is directly converted into instructions and executed automatically, maintenance personnel are freed from tedious operation and maintenance, reducing operation and maintenance costs. At the same time, the solution also achieves automatic closed-loop control of the operation and maintenance, and also solves the problem of complex operation and maintenance in traditional network operation and maintenance architecture and methods in related technologies, improving operation and maintenance efficiency.

Through the description of the foregoing embodiments, those having ordinary skill in the art may clearly understand that the autonomous operation and maintenance method according to the foregoing embodiments may be implemented by software in addition to a necessary universal hardware platform, and definitely may also be implemented by hardware. However, in many cases, the former is a preferred implementation. Based on such understanding, the essence of the technical solutions of the present disclosure or the part contributing to the related art may be embodied in the form of a software product, the computer software product is stored in a storage medium (such as Read-Only Memory/Random Access Memory (ROM/RAM), the magnetic disk, and the optical disk), and includes several instructions for instructing a terminal device (which may be a mobile phone or a computer), a server, a network device, or the like to perform the autonomous operation and maintenance methods described in the embodiments of the present disclosure.

The embodiments further provide an autonomous operation and maintenance apparatus. The autonomous operation and maintenance apparatus is used for implementing the described embodiments and exemplary implementations, and what has been described will not be elaborated. The term "module", as used hereinafter, is a combination of software and/or hardware capable of realizing a predetermined function. Although the autonomous operation and maintenance apparatus described in the following embodiments is preferably implemented by software, implementation of hardware or a combination of software and hardware is also possible and conceived.

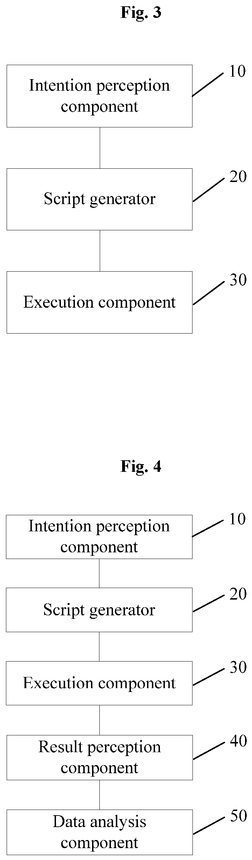

Fig. 3 is a structural block diagram of an autonomous operation and maintenance apparatus according to some embodiments of the present disclosure. As shown in Fig. 3, the autonomous operation and maintenance apparatus includes an intention perception component 10, a script generator 20 and an execution component 30.

The intention perception component 10 is configured to perceive an operation and maintenance intention for operating and maintaining an object to be operated and maintained and generate an intention expression.

The script generator 20 is configured to generate a first operation instruction script or a first command sequence according to the intention expression.

The execution component 30 is configured to execute the first operation instruction script or the first command sequence on the object to be operated and maintained.

Fig. 4 is a structural block diagram of an autonomous operation and maintenance apparatus according to some other embodiments of the present disclosure. As shown in Fig. 4, the autonomous operation and maintenance apparatus further includes, in addition to all the modules shown in Fig. 3:
a result perception component 40, configured to acquire device information after the first operation instruction script or the first command sequence is executed on the object to be operated and maintained; and
a data analysis component 50, configured to analyze the device information according to a predetermined strategy, and determining whether the device information meets an expected target based on the analysis of the device information.

It should be noted that each module may be implemented by software or hardware. The latter may be implemented in the following manner, but is not limited thereto. All the modules are located in a same processor; alternatively, the modules are located in different processors in an arbitrary combination.

To facilitate understanding of the technical solutions provided in the embodiments of the present disclosure, the technical solution is described in detail as follows with reference to embodiments of specific scenarios.

To meet the new challenges and demands posed by the coexistence of multiple systems in ICT and B5G networks, the complexity of new technology synergy, and the inherent wisdom of operations, the embodiments of the present disclosure propose an intention-based autonomous operation and maintenance method and system, which takes the script generator component as its core, and is driven by intention, to form a closed-loop control process of script/command execution, result perception, data analysis, and strategy decision-making between the object to be operated and maintained (under operation and maintenance) (i.e., the device) and the management network elements (i.e., the management system). This integrated autonomous operation and maintenance system is an important improvement and exploration of the implementation architecture and method for the autonomous operation and maintenance system in the ICT and B5G fields

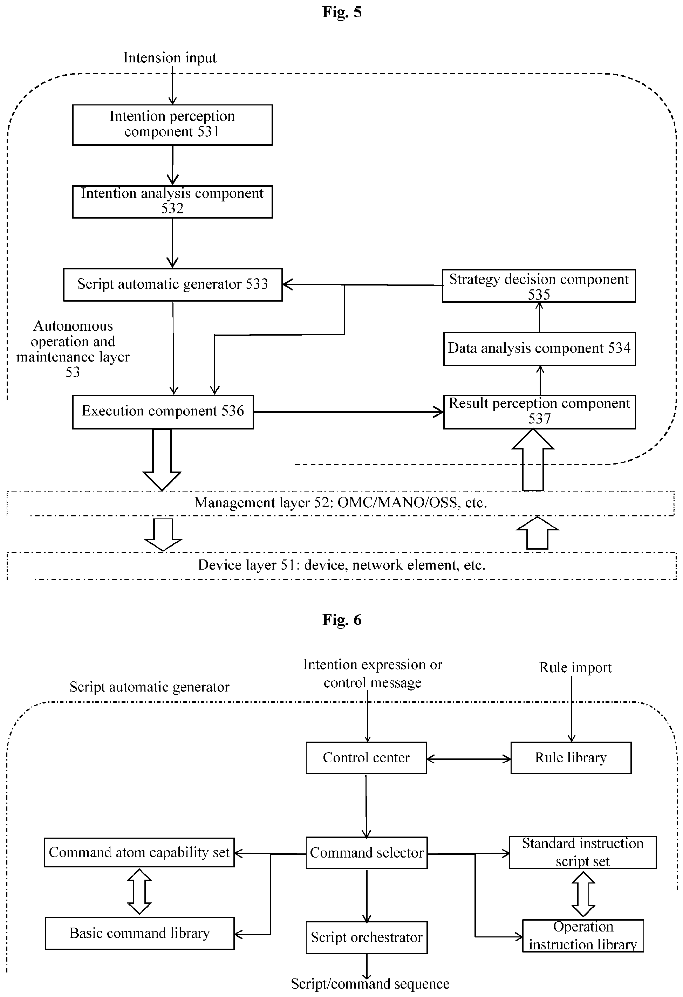

The structure of the intention-based autonomous operation and maintenance system proposed in the embodiments of the present disclosure is as shown in Fig. 5. As shown in Fig. 5, the structure of the autonomous operation and maintenance system is composed of the following three parts:
a device layer 51, i.e., the specific object to be operated and maintained (under operation and maintenance), such as network elements of a 4G core network, network elements of a 5G core network, a switch and a router;
a management layer 52, which is a basic management network element of the device layer 51, such as an Operation and Maintenance Center (OMC), an Element Management System (EMS), a Management and Orchestration (MANO), and an Operation Support System (OSS), and is responsible for performing basic FCAPS operation and maintenance management on the devices in the device layer 51; and
an autonomous operation and maintenance layer 53, i.e., a management network element or a logic component for intelligent operation and maintenance, such as a Management Data Analysis Function (MDAF), which is responsible for autonomous operation and maintenance management of the devices.

The device layer 51 and the management layer 52 are existing operation and maintenance management structures, and are mainly responsible for basic FCAPS and operation and maintenance management such as failure and complaint. The autonomous operation and maintenance layer 53 is a management layer newly introduced in the embodiments of the present disclosure, and internal functional components of the autonomous operation and maintenance layer 53 are introduced as follows.

An intention perception component 531 is responsible for perceiving an operation and maintenance intention of a user. For example, the user needs to observe slice SLA (such as throughput, time delay, jitter, packet loss rate, and reliability) parameters purchased by himself/herself, optimize and adjust inferior parameters, and convert the intention into an intention expression. The intention expression may be a rule, and may also be a strategy, or a combination of descriptions of actions. By means of the intention perception component 531, the operation intention of the operation and maintenance personnel may be directly converted into an instruction and automatically executed, so that the operation and maintenance personnel are released from tedious operation and maintenance work, thereby reducing the operation and maintenance costs.

An intention analysis component 532 is configured to receive the intention expression description of the user from the intention perception component 531, such as slice SLA parameter observation and slice SLA optimization adjustment, and generate a specific control action, control information, or strategy information.

A script automatic generator 533 receives the control action, control information or strategy information from the intention analysis component 532, automatically generates a new script or command sequence according to the local rule, the command set and the script, and executes or operates the device through the management layer network element. In this embodiment, the architecture of the script automatic generator is proposed creatively, and the technical principle thereof is defined and described, which facilitates the reference and evolution of the autonomous operation and maintenance technology.

A data analysis component 534 receives data acquired by a result perception component 537, analyzes the data, generates an analysis result according to a certain strategy, and pushes the analysis result to a strategy decision component 535.

The strategy decision component 535 decides, according to an expert library or an artificial intelligence rule library and based on the received analysis data, whether an expected target of a script or an instruction set is reached, and decides whether this adjustment is successful and whether further adjustment is needed. If this adjustment is successful, the adjustment is stopped, there is no need to further generate an operation instruction, and the strategy decision component 535 notifies the script automatic generator to stop further adjustment. If the expected target is not reached, a new adjustment strategy is generated and sent to the script automatic generator, and the flow enters the next closed-loop control. In this embodiment, applying the artificial intelligence technology to the strategy decision and rule library learning reasoning of the system is an attempt to apply the artificial intelligence technology in the operation and maintenance field.

Specifically, in this embodiment, the internal structure principle of the script automatic generator 532 is shown in Fig. 6. The script automatic generator 532 includes a control center component, a rule library component, a command selector component, a basic command library component, a command atom capability set component, an operation instruction library component, a standard instruction script set component, and a script orchestrator component.

The control center component is a control center of the script automatic generator and is configured to receive an intention expression from the "intention analysis component" or a script generation control message of the "strategy decision component", decide whether to generate a script and how to generate the script, and when a new script needs to be generated, control, according to a script generation rule message of the "rule library component", the "command selector component" to select an appropriate command/command atom capability set or instruction/command script, and generate a new script or command sequence via the "script orchestrator".

The rule library component stores a rule for generating a script or a command set, and the rule determines a method for generating the script or the command set. In this embodiment, the rule may be imported or configured by expert experience and may alternatively be a generation rule derived by artificial intelligence learning in the "strategy decision component", which is dynamic, continuously adjusted and optimized.

The command selector component is configured to receive a control message from the control center component, select a suitable command/command atom capability set or instruction/command script set, and transfer the suitable command/command atom capability set or instruction/command script set to the script orchestrator component so as to generate a new script or command sequence.

The basic command library component includes a basic command set for performing FCAPS management on a device of the device layer, and may perform basic FCAPS operation maintenance on the device.

The command atom capability set component includes a preliminary combination of basic FCAPS commands, and a complete one or a group of basic functions, for example, a device upgrade operation atom capability formed by a plurality of basic FCAPS commands, wherein the group of atom capabilities forms an atom capability set. The operation and maintenance atomic capability in the atomic capability set may be preset in advance, and may also be subsequently dynamically added by the script generator.

The operation instruction library component includes a device hardware resource management instruction, a bottom-layer operating system instruction (e.g. a file system operation instruction, a storage system operation instruction, etc.) on which a device depends, and a support-layer (e.g. a cloud operating system) instruction set, and through these instructions, device hardware resources or virtualization-layer resources can be managed and maintained.

The standard instruction script set component includes a device minimum operation capability formed by a group of ordered operation instructions, for example, a network card driver program loading a control script, etc., and the group of minimum operation capability forms a standard instruction script set. The standard instruction scripts in the standard instruction script set may be preset in advance, and may also be added dynamically by the script generator subsequently.

The script orchestrator component is configured to generate a new control script or command sequence based on information input by the command selector according to a selected command/command atom capability set or instruction/command script.

The result perception component 537 is configured to acquire a script or an execution result after the script is executed, such as information about logs, performance, alarms or resources, from the execution component 536 via the management layer network element, clean, sort and filter the information according to a certain rule and then send the information to the data analysis component.

Through the components and collaborative division among the components in the aforementioned intention-based autonomous operation and maintenance system, new challenges posed to operation and maintenance by the coexistence of multiple systems in ICT and B5G networks, the complexity of new technology collaboration, and the inherent wisdom can be effectively addressed.

Below, the intention-based autonomous operation and maintenance method will be described in conjunction with specific scenarios.

### Embodiment 1

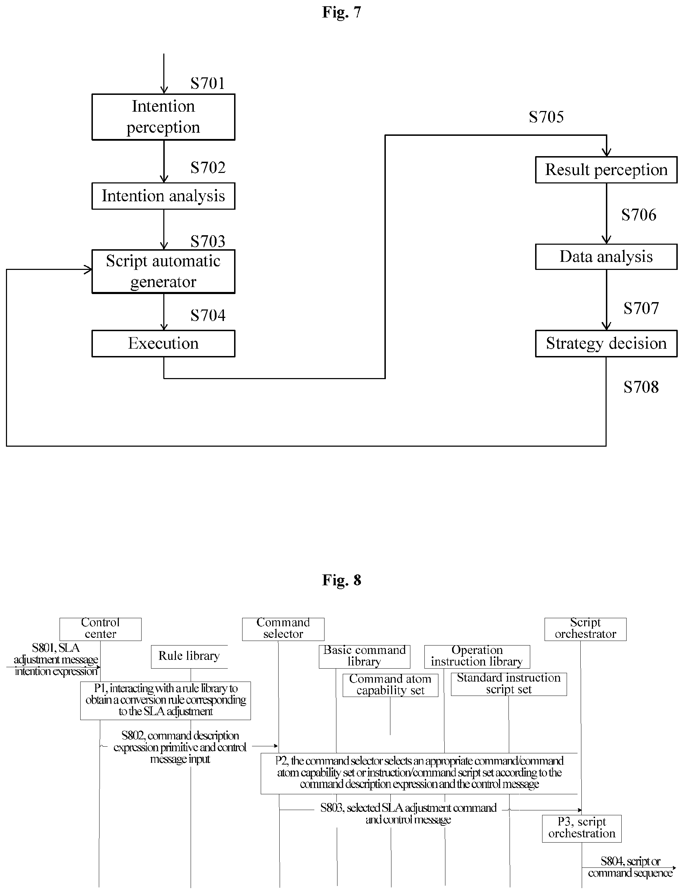

When an industry customer has reported that the latency of the purchased slice SLA is too high, the operation and maintenance personnel need to optimize the latency parameter of the slice purchased by the customer. Fig. 7 is a flowchart of an automatic optimization method for an intention-based autonomous operation and maintenance system according to some embodiments of the present disclosure. As shown in Fig. 7, the automatic optimization method includes the following operations S701 to S708.

In operation S701, intention is perceived.

Specifically, the intention perception component perceives the intention of the operation and maintenance personnel, and optimizes delay of a designated slice.

In operation S702, the intention is analyzed.

Specifically, the intention analysis component analyzes the intention of the operation and maintenance personnel, parses a slice name, a slice type and an operation type (i.e., optimization) in the intention of the operation and maintenance personnel, and outputs an intention expression. The intention expression includes, but is not limited to, a slice name, a slice type, an operation type (i.e., optimization), an operation range (for example, wireless, transmission, core network, application server, and the like), and the like.

In operation S703, the script automatic generator generates a script or a command sequence.

Specifically, the script automatic generator generates a specific operation instruction script or command sequence according to the input intention expression.

In operation S704, the script or command sequence is executed.

Specifically, the execution component executes the specific script or command sequence on the device required to execute the specific script or command sequence.

In operation S705, a result is perceived.

Specifically, the data perception component collects information on the device being executed, and in this embodiment, the collected information is a delay indicator of the device within each operation range.

In operation S706, data is analyzed.

Specifically, the data analysis component collectively analyzes the processing delay of the device in each operation range, and gives a result, which is a slice end-to-end delay in this embodiment.

In operation S707, a strategy is decided.

Specifically, the strategy decision component judges, according to the obtained slice end-to-end delay and according to a local expert library rule or an artificial intelligent reasoning result, whether the end-to-end delay after decision optimization has satisfied a requirement; if the end-to-end delay has satisfied the requirement, the adjustment of the time delay ends.

In operation S708, the flow returns to the script automatic generator.

Specifically, if the end-to-end delay after decision adjustment does not satisfy the requirement, a delay adjustment control message is sent to the script generator component to continue adjusting the delay of the device within each operation range of the slice.

### Embodiment 2:

Based on the Embodiment 1, a method for generating a script by a script automatic generator after the end-to-end delay after the decision adjustment does not satisfy the requirement and the flow returns to the script automatic generator is described. As shown in Fig. 8, the method for generating the script by the script automatic generator includes the following operations S801 to S804.

In operation S801, the control center receives a slice delay adjustment intention expression, and triggers a process P1.

In process P1: the control center interacts with the rule library to obtain a script generation rule corresponding to the slice delay adjustment expression, wherein the rule includes but is not limited to the following content: a delay adjustment range (for example, wireless, transmission, and core network), a delay adjustment command selection manner, a delay script synthesis manner, a delay script execution manner, and the like, and generates a command description expression and control information.

In operation S802, the control center sends the command description expression and the control information to the command selector, and triggers a process P2.

In process P2: the command selector selects an appropriate command or atomic capability in a command atomic capability set according to the command description expression and the control information, and selects an appropriate instruction or a standard script in an instruction script set.

In operation S803, the command selector component sends the selected command/command atom capability or instruction/standard instruction script and the control information to the script orchestrator component to trigger process P3.

In process P3: the script orchestrator component orchestrates and generates a specific script or command sequence required for adjusting the slice SLA delay according to the received command/command atom capability or command/standard command script and the control information.

In operation S804, the script orchestrator sends the generated specific script or command sequence for adjusting the SLA slice delay to the execution component.

The various embodiments of the present disclosure represent a practical application and beneficial exploration of the autonomous network operation and maintenance technology, holding significant technical value in the field of intention-based operation and maintenance. The solution enables the direct conversion of the operation intention into commands that can be executed automatically, thereby liberating maintenance personnel from tedious operation and maintenance tasks and reducing operation and maintenance costs. The achievement of automatic closed-loop control in operation and maintenance, from initiation to execution, perception, analysis, decision-making, and back to execution, represents a beneficial technical exploration of autonomous closed-loop operation and maintenance. The application of artificial intelligence technology to the strategic decision-making of the system and the rule library learning and reasoning is an attempt to utilize artificial intelligence in the field of operation and maintenance. The embodiments of the present disclosure creatively propose the architecture of a script automatic generator and define and explain its technical principles, which is conducive to the reference and evolution of autonomous operation and maintenance technology.

The embodiments of the present disclosure further provide a computer-readable storage medium. The computer-readable storage medium stores a computer program, and the computer program, when being executed by a processor, implements operations in any one of the method embodiments.

In an exemplary embodiment, the computer-readable storage medium may include, but is not limited to, any medium that can store a computer program, such as a Universal Serial Bus (USB) flash drive, a Read-Only Memory (ROM), a Random Access Memory (RAM), a removable hard disk, a magnetic disk, or an optical disc.

The embodiments of the present disclosure also provide an electronic apparatus, including a memory, a processor and a computer program stored on the memory and capable of running on the processor, wherein the processor executes the computer program to implement operations in any of the described method embodiments.

In an exemplary embodiment, the electronic apparatus may further include a transmission device and an input/output device, wherein the transmission device is connected to the processor, and the input/output device is connected to the processor.

For specific embodiments in this embodiment, reference may be made to the embodiments described in the foregoing embodiments and exemplary embodiments, and details are not repeatedly described in this embodiment.

Obviously, those having ordinary skill in the art should understand that each module or each operation of the described embodiments of the present disclosure can be implemented by a universal computing device, they may be centralized on a single computing device or distributed on a network composed of a plurality of computing devices, they can be implemented by program codes executable by a computing apparatus, and thus can be stored in a storage apparatus and executed by the computing apparatus. Furthermore, in some cases, the shown or described operations may be executed in an order different from that described here, or they are made into integrated circuit modules respectively, or a plurality of modules or operations therein are made into a single integrated circuit module for implementation. In this way, the embodiments of the present disclosure are not limited to any specific combination of hardware and software.

The above description is only the exemplary embodiments of the present disclosure, and is not intended to limit the present disclosure. For those having ordinary skill in the art, the embodiments of the present disclosure may have various modifications and variations. Any modifications, equivalent replacements, improvements and the like made within the principle of the present disclosure shall fall within the protection scope of the present disclosure.

## Claims

1. An autonomous operation and maintenance method, comprising:
perceiving an operation and maintenance intention for operating and maintaining an object to be operated and maintained and generating an intention expression;
generating a first operation instruction script or a first command sequence according to the intention expression; and
executing the first operation instruction script or the first command sequence on the object to be operated and maintained.

2. The autonomous operation and maintenance method according to claim 1, wherein perceiving the operation and maintenance intention for operating and maintaining the object to be operated and maintained and generating the intention expression comprises:
parsing a slice name, a slice type and an operation type in the operation and maintenance intention to generate the intention expression, wherein the intention expression at least comprises one of: a slice name, a slice type, an operation type and an operation range.

3. The autonomous operation and maintenance method according to claim 2, wherein the intention expression is a combination of descriptions of rules, strategies or actions.

4. The autonomous operation and maintenance method according to claim 1, wherein generating the first operation instruction script or the first command sequence according to the intention expression comprises:
selecting a command, a command atom capability set, an instruction or an instruction script satisfying a condition, based on the intention expression and according to a generation rule; and
generating the first command sequence according to the command and/or the command atom capability set, or generating the first operation instruction script according to the instruction and/or the instruction script.

5. The autonomous operation and maintenance method according to claim 4, wherein selecting the command, the command atom capability set, the instruction or the instruction script satisfying the condition, based on the intention expression and according to the generation rule comprises:
generating a first control action, first control information or first control strategy information according to the intention expression; and
selecting a first command, a first command atom capability set, a first instruction or a first instruction script set based on the first control action, the first control information or the first control strategy information and according to the generation rule.

6. The autonomous operation and maintenance method according to claim 5, wherein the generation rule comprises one of: a local rule, a command set generation rule, or a script generation rule.

7. The autonomous operation and maintenance method according to claim 1, wherein after executing the first operation instruction script or the first command sequence on the object to be operated and maintained, the autonomous operation and maintenance method further comprises:
acquiring device information after the first operation instruction script or the first command sequence is executed on the object to be operated and maintained; and
analyzing the device information according to a predetermined strategy, and determining whether the device information meets an expected target based on the analysis of the device information.

8. The autonomous operation and maintenance method according to claim 7, wherein after acquiring the device information after the first operation instruction script or the first command sequence is executed on the object to be operated and maintained, the autonomous operation and maintenance method further comprises:
cleaning, organizing and filtering the device information according to a predetermined rule, wherein the device information at least comprises one of: log information, performance information, alarm information and resource information.

9. The autonomous operation and maintenance method according to claim 7, wherein after determining whether the device information meets the expected target based on the analysis of the device information, the autonomous operation and maintenance method further comprises:
terminating a current operation and maintenance of the object under operation and maintenance in a case where it is determined that the device information meets the expected target; and
in a case where it is determined that the device information does not meet the expected target, adjusting the intention expression and executing a new operation and maintenance process on the object under operation and maintenance based on the adjusted intention expression.

10. The autonomous operation and maintenance method according to claim 9, wherein executing the new operation and maintenance process on the object under operation and maintenance based on the adjusted intention expression comprises:
selecting a second command, a second command atom capability set, a second instruction or a second instruction script set according to the adjusted intention expression and a generation rule corresponding to the adjusted intention expression, so as to generate a second operation instruction script or a second command sequence; and
executing the second operation instruction script or the second command sequence on the object under operation and maintenance to start the new operation and maintenance process.

11. The autonomous operation and maintenance method according to claim 1, further comprising:
performing, according to a basic command set, basic Fault Configuration Accounting Performance and Security Management, FCAPS, operation maintenance on the object to be operated and maintained.

12. An autonomous operation and maintenance apparatus, comprising:
an intention perception component, configured to perceive an operation and maintenance intention for operating and maintaining an object to be operated and maintained and generate an intention expression;
a script generator, configured to generate a first operation instruction script or a first command sequence according to the intention expression; and
an execution component, configured to execute the first operation instruction script or the first command sequence on the object to be operated and maintained.

13. The autonomous operation and maintenance apparatus according to claim 12, further comprising:
a result perception component, configured to acquire device information after the first operation instruction script or the first command sequence is executed on the object to be operated and maintained; and
a data analysis component, configured to analyze the device information according to a predetermined strategy, and determining whether the device information meets an expected target based on the analysis of the device information.

14. A computer-readable storage medium, wherein the computer-readable storage medium stores a computer program, and the computer program, when being executed by a processor, implements operations of the autonomous operation and maintenance method according to any one of claims 1 to 11.

15. An electronic apparatus, comprising a memory, a processor and a computer program stored on the memory and capable of running on the processor, wherein the processor executes the computer program to implement operations of the autonomous operation and maintenance method according to any one of claims 1 to 11.
